# DEMANDE DE BREVET EUROPEEN

(11) **EP 2 444 284 A1**
(43) Date de publication de la demande: **25.04.2012**
(21) Numéro de dépôt: 11183277.0
(22) Date de dépôt: 29.09.2011
(51) Int. Cl.: B60Q 1/28, F21V 14/04

(54) **Dispositif d'éclairage et de signalisation d'un véhicule automobile et procédé de fonctionnement d'un tel dispositif**

(30) Priorité: 29.09.2010 FR 1057856
(71) Demandeur: VALEO VISION, 93012 Bobigny (FR)
(72) Inventeur: Albou, Pierre, 75013 Paris (FR); De Lamberterie, Antoine, 75019 Paris (FR); Dubosc, Christophe, 93250 Villemomble (FR); Mornet, Eric, 94130 Nogent sur Marne (FR); Meyrenaud, Jean-Luc, 93190 Livry Gargan (FR); Reiss, Benoît, 95580 Margency (FR)

(57) **Abrégé**

Procédé de fonctionnement d'un dispositif d'éclairage et de signalisation (1) d'un véhicule automobile, caractérisé en ce qu'il comprend les étapes suivantes :
- activer un premier système optique (3) destiné à générer un premier faisceau lumineux à coupure, notamment un feu de croisement ou un feu antibrouillard,
- fixer des conditions de fonctionnement du premier système optique de sorte qu'il produise un troisième faisceau lumineux,
- activer un deuxième système optique (4) destiné à générer un deuxième faisceau lumineux,
les troisième et deuxième faisceaux lumineux générés étant tels que leur union constitue un faisceau résultant de type signalisation diurne.

## Description

La présente invention concerne le domaine des dispositifs d'éclairage et de signalisation pour véhicules automobiles. L'invention concerne un procédé de fonctionnement d'un dispositif d'éclairage et de signalisation. L'invention concerne aussi un dispositif d'éclairage et de signalisation mettant en oeuvre un tel fonctionnement.

Dans le domaine de la signalisation, tout comme dans celui de l'éclairage, de nombreuses contraintes réglementaires laissent peu de place pour modifier l'aspect des feux à l'état allumé, puisque la photométrie des faisceaux lumineux est imposée dans une très large mesure. Cependant, le style et l'esthétique sont des données très importantes pour ce type de produit, et les équipementiers et les constructeurs automobiles cherchent à donner une "signature" à leurs produits, pour qu'ils soient aisément identifiables par l'utilisateur final. Or, cette signature est souvent différente lorsque le produit est éteint, allumé en mode de signalisation diurne et allumé en mode d'éclairage. En effet, de nuit, les dispositifs d'éclairage et/ou de signalisation ne sont généralement pas visibles sur toute leur surface extérieure: seules les plages éclairantes des fonctions optiques de base sont éclairées. Ainsi, un feu de signalisation est composé de plusieurs plages éclairantes correspondant aux différentes fonctions optiques à réaliser, dont des fonctions allumées en continu comme la fonction lanterne, et des fonctions allumées seulement par périodes.

Les dispositifs d'éclairage et/ou de signalisation ont donc en fait deux aspects bien différents selon qu'ils sont allumés ou éteints. La tendance actuelle à augmenter la surface des projecteurs et des feux ne fait qu'accentuer encore cette différence. C'est tout particulièrement le cas de feux à grande surface extérieure du type feux avec "retour d'aile", c'est-à-dire des feux qui s'étendent non seulement sur la face avant ou arrière du véhicule, mais aussi sur le flanc de celui-ci au niveau de la partie de raccordement d'une aile à cette face avant ou arrière : on a dans ce cas précis souvent une forte disparité entre la surface allumée utile et la surface extérieure complète du feu.

Il existe donc une tendance à perdre, de nuit, la "signature" des dispositifs d'éclairage et/ou de signalisation.

L'invention a pour but de fournir un procédé de fonctionnement d'un dispositif d'éclairage et de signalisation remédiant aux problèmes mentionnés précédemment et améliorant les procédés de fonctionnement connus de l'art antérieur.

Un objet de l'invention propose un procédé de fonctionnement permettant de limiter les différences d'aspects allumés de jour et de nuit d'un dispositif d'éclairage et de signalisation.

Préférentiellement, le procédé selon l'invention régit le fonctionnement d'un dispositif d'éclairage et de signalisation d'un véhicule automobile. Le procédé comprend les étapes suivantes :
- activer un premier système optique destiné à générer un premier faisceau lumineux à coupure, notamment un feu de croisement ou un feu antibrouillard,
- fixer des conditions de fonctionnement du premier système optique de sorte qu'il produise un troisième faisceau lumineux,
- activer un deuxième système optique destiné à générer un deuxième faisceau lumineux, les troisième et deuxième faisceaux lumineux générés étant tels que leur union constitue un faisceau résultant de type signalisation diurne.

Ainsi, il est possible d'obtenir des signatures allumées de jour (obtenue grâce aux troisième et deuxième faisceaux lumineux) et de nuit (obtenue grâce aux premier et deuxième faisceaux lumineux) qui sont identiques ou très similaires. Ils peuvent notamment avoir des plages éclairantes de formes identiques ou très similaires.

Le deuxième système optique peut être destiné à générer un quatrième faisceau lumineux, notamment de type lanterne et le procédé peut comprendre une étape supplémentaire suivante :
- fixer des conditions de fonctionnement du deuxième système optique
   de manière à ce qu'il produise le deuxième faisceau lumineux.
Ainsi, il est possible d'obtenir une signature allumée de jour, obtenue grâce aux troisième et deuxième faisceaux lumineux, identique ou très similaire à une signature allumée de nuit, obtenue grâce aux premier et quatrième faisceaux lumineux. Notamment, même lorsque la ou les surfaces éclairantes du premier système optique sont distinctes de celles du second système optique, ces systèmes peuvent avoir des plages éclairantes de formes identiques ou très similaires.

Le deuxième système optique peut être éteint lorsque le premier système optique génère le premier faisceau lumineux. Dans ce cas, de préférence, la plage éclairante résulte d'une surface éclairante, tel qu'un réflecteur, commune au deux systèmes optiques.

Les conditions de fonctionnement du premier système optique, de sorte qu'il produise le troisième faisceau lumineux, peuvent comprendre une sous-alimentation du premier système optique et/ou une alimentation de seulement quelques éléments de la source de lumière du premier système optique. Si plusieurs sources lumineuses sont utilisées dans le système optique, la sous-alimentation afin de former le troisième faisceau peut être, selon les besoins, identique ou différente pour chacune des sources. Ceci permet d'utiliser le premier système optique pour qu'il participe à la fois à la signature allumée de jour grâce au troisième faisceau lumineux et à la signature allumée de nuit grâce au premier faisceau lumineux.

Les conditions de fonctionnement du deuxième système optique, de sorte qu'il produise le quatrième faisceau lumineux, comprennent une sous-alimentation du deuxième système optique et/ou une extinction d'éléments de la source de lumière du deuxième système optique, le deuxième système optique produisant par exemple, sous alimentation nominale d'au moins certains éléments de la source, un deuxième faisceau lumineux constituant une partie d'un faisceau de signalisation diurne. Ceci permet d'utiliser le deuxième système optique pour qu'il participe à la fois à la signature allumée de jour grâce au deuxième faisceau lumineux et à la signature allumée de nuit grâce au quatrième faisceau lumineux.

Les conditions de fonctionnement du premier système optique, de sorte qu'il produise le troisième faisceau lumineux, peuvent comprendre un mouvement d'au moins un élément du premier système optique, de sorte que le troisième faisceau lumineux soit déduit du premier faisceau lumineux par au moins une déviation du premier faisceau lumineux vers le haut.

Les conditions de fonctionnement du premier système optique, de sorte qu'il produise le troisième faisceau lumineux peuvent, comprendre un mouvement d'au moins un élément du premier système optique, de sorte que le faisceau lumineux produit par le premier système optique impacte un élément diffusant, réfractant et/ou réfléchissant. Dans ce cas, la signature allumée de jour du dispositif et la signature allumée de nuit du dispositif ne peut être rigoureusement la même. En effet, il existe au moins un déplacement, par exemple une translation, de la signature relativement à la carrosserie du véhicule automobile, lors du passage du fonctionnement de nuit au fonctionnement de jour. Néanmoins, les formes des signatures allumées de jour et de nuit peuvent être identiques ou se ressembler.

On peut activer un actionneur de correction de portée du premier système optique pour contribuer au mouvement de l'au moins un élément du premier système ou obtenir le mouvement de l'au moins un élément du premier système. Ainsi, il est possible de n'utiliser qu'un seul actionneur pour réaliser une correction de portée des feux de croisement et pour produire le troisième faisceau grâce au premier système optique.

On peut activer un actionneur spécifique, distinct d'un actionneur de correction de portée du premier système, pour contribuer au mouvement de l'au moins un élément du premier système ou obtenir le mouvement de l'au moins un élément du premier système. Selon une variante de réalisation, il est possible que l'actionneur soit conçu de manière à permettre le mouvement complet de l'élément actionné. Selon une autre variante de réalisation, le dispositif comprend les deux actionneurs : un actionneur classique de correction de portée des feux de croisement et l'actionneur spécifique permettant au premier système optique de produire le troisième faisceau lumineux, et le mouvement complet de l'élément actionné est obtenu par le fonctionnement des deux actionneurs. Dans ce cas, ce deuxième actionneur est de préférence de structure simple et peut ne présenter qu'une faible précision, voire n'avoir que deux positions. Il peut s'agir d'un actionneur avec une tige d'actionnement avec une faible course. Dans le cas où l'actionneur a deux positions, celles-ci peuvent être délimitées par de simples butées mécaniques ; l'actionneur peut alors être un solénoïde.

L'actionneur de correction de portée ou l'actionneur spécifique peut permettre de déplacer un réflecteur du premier système relativement à une source de lumière du premier système ou de déplacer une lentille optique relativement à la source de lumière et/ou relativement au réflecteur.

La ou les sources de lumière du premier et/ou du deuxième systèmes optiques sont des LEDs ou des ensembles de LEDs.

Selon l'invention, le dispositif d'éclairage et de signalisation d'un véhicule automobile comprend un premier système optique destiné à générer un premier faisceau lumineux à coupure, notamment un feu de croisement ou un feu antibrouillard et un deuxième système optique générant un deuxième faisceau lumineux Le premier système optique est apte à générer un troisième faisceau lumineux et l'union des troisième et deuxième faisceaux lumineux constitue un faisceau résultant de type signalisation diurne.

Le deuxième système optique peut être apte à générer un quatrième faisceau lumineux notamment un quatrième faisceau lumineux de type lanterne.

Selon une variante de réalisation, le premier et/ou le deuxième systèmes optiques comprennent un réflecteur. Préférentiellement, le premier et le deuxième systèmes optiques comprennent chacun un réflecteur.

Selon une variante de réalisation, les réflecteurs du premier et du deuxième système optique sont des réflecteurs de type elliptique, admettant chacun deux foyers. Ces deux systèmes optiques comprennent chacun une source de lumière, de préférence au moins une diode électroluminescente ou DEL, agencée au premier foyer de chacun de ces réflecteurs. Les deuxièmes foyers des réflecteurs de type elliptique du premier et du deuxième système optique sont conjugués avec le foyer d'un autre système dioptrique convergent. C'est-à-dire que les rayons partant d'un des premier foyers, se réfléchissent sur le réflecteur correspondant et convergent vers le deuxième foyer, se croisent et divergent à nouveau après croisement, puis rencontre l'autre système dioptrique qui va les dévier de manière à ce qu'après la déviation, les rayons soient sensiblement tous parallèles à une unique direction déterminée. De préférence, un seul autre élément dioptrique est associé aux deux systèmes optiques, c'est-à-dire que cet autre élément dioptrique et les premier et deuxième systèmes optiques sont agencés de manière à ce que les deuxièmes foyers des réflecteurs de type elliptique du premier et du deuxième système optique sont tous les deux conjugués avec le foyer du même autre système dioptrique. De préférence, cet autre système optique est un réflecteur parabolique ou à portions paraboliques. De préférence, le premier système optique, et éventuellement le deuxième, comprennent un cache présentant un bord de coupure agencé au niveau du deuxième foyer du réflecteur de type elliptique correspondant. De préférence, ce cache est une plieuse.

Préférentiellement, le premier et le deuxième système optique comprennent chacun une plieuse. De préférence, le dispositif selon l'invention comprend une pièce comprenant deux faces, chacune de ces faces comportant l'une des plieuses.

Le dispositif peut comprendre des moyens de modification des conditions de fonctionnement du premier système optique pour générer sélectivement le premier ou le troisième faisceau lumineux et/ou des moyens de modification des conditions de fonctionnement du deuxième système optique pour générer sélectivement le deuxième ou le quatrième faisceau lumineux.

Les moyens de modification des conditions de fonctionnement du premier système optique peuvent comprendre un moyen de modification des conditions d'alimentation du premier système optique et/ou les moyens de modification des conditions de fonctionnement du deuxième système optique peuvent comprendre un moyen de modification des conditions d'alimentation du deuxième système optique.

Les moyens de modification des conditions de fonctionnement du premier système optique peuvent comprendre un moyen de modification de la position d'au moins un élément du premier système optique.

Le moyen de modification de la position d'au moins un élément du premier système optique peut comprendre un actionneur de correction du premier système optique.

Le moyen de modification de la position d'au moins un élément du premier système optique peut comprendre un actionneur spécifique distinct d'un actionneur de correction du premier système optique.

Le dispositif peut comprendre un élément diffusant et/ou réfractant et/ou réfléchissant destiné à être éclairé par le troisième faisceau lumineux.

Les premier et deuxième systèmes optiques peuvent être réunis au sein d'un dispositif multifonction, les premier et deuxième systèmes optiques partageant au moins une surface réfléchissante et/ou un dioptre optique.

Un autre objet de l'invention est un véhicule automobile comprenant un dispositif d'éclairage et de signalisation défini précédemment.

Le dessin annexé représente, à titre d'exemple, différents modes de réalisation d'un dispositif d'éclairage et de signalisation pour véhicule automobile selon l'invention.

La figure 1 est une vue schématique d'un deuxième mode de réalisation du dispositif d'éclairage et de signalisation selon l'invention.

Les figures 2 à 4 sont des vues selon trois directions différentes d'un premier mode de réalisation du dispositif selon invention.

Les figures 5 et 6 sont deux vues schématiques d'une première variante du deuxième mode de réalisation du dispositif selon l'invention, la figure 5 représentant le dispositif dans une première configuration et la figure 6 représentant le dispositif dans une deuxième configuration.

Les figures 7 et 8 sont deux vues schématiques d'une deuxième variante du deuxième mode de réalisation du dispositif selon l'invention, la figure 7 représentant le dispositif dans une première configuration et la figure 8 représentant le dispositif dans une deuxième configuration.

Les figures 9 et 10 sont deux vues schématiques d'une troisième variante du deuxième mode de réalisation du dispositif selon l'invention, la figure 9 représentant le dispositif dans une première configuration et la figure 10 représentant le dispositif dans une deuxième configuration.

La figure 11 est un diagramme isolux représentant l'impact d'un faisceau lumineux de type signalisation diurne obtenu selon l'invention, sur un plan vertical disposé à distance d'un dispositif d'éclairage et de signalisation.

La figure 12 est une grille photométrique représentant les contraintes réglementaires photométriques s'appliquant à un faisceau de type signalisation diurne.

La figure 13 est un diagramme isolux représentant l'impact d'une première partie d'un faisceau lumineux de type feu de croisement sur un plan vertical disposé à distance d'un dispositif d'éclairage et de signalisation.

La figure 14 est un diagramme isolux représentant l'impact d'une deuxième partie d'un faisceau lumineux de type feu de croisement sur un plan vertical disposé à distance d'un dispositif d'éclairage et de signalisation.

La figure 15 est un diagramme isolux représentant l'impact d'un faisceau lumineux de type feu de croisement composé des première et deuxième parties de faisceau des figures 13 et 14 sur un plan vertical disposé à distance d'un dispositif d'éclairage et de signalisation.

La figure 16 est un diagramme isolux représentant l'impact d'un premier faisceau lumineux utilisé pour la mise en oeuvre de l'invention, sur un plan vertical disposé à distance d'un dispositif d'éclairage et de signalisation.

La figure 17 est un diagramme isolux représentant l'impact d'un deuxième faisceau lumineux utilisé pour la mise en oeuvre de l'invention, sur un plan vertical disposé à distance d'un dispositif d'éclairage et de signalisation.

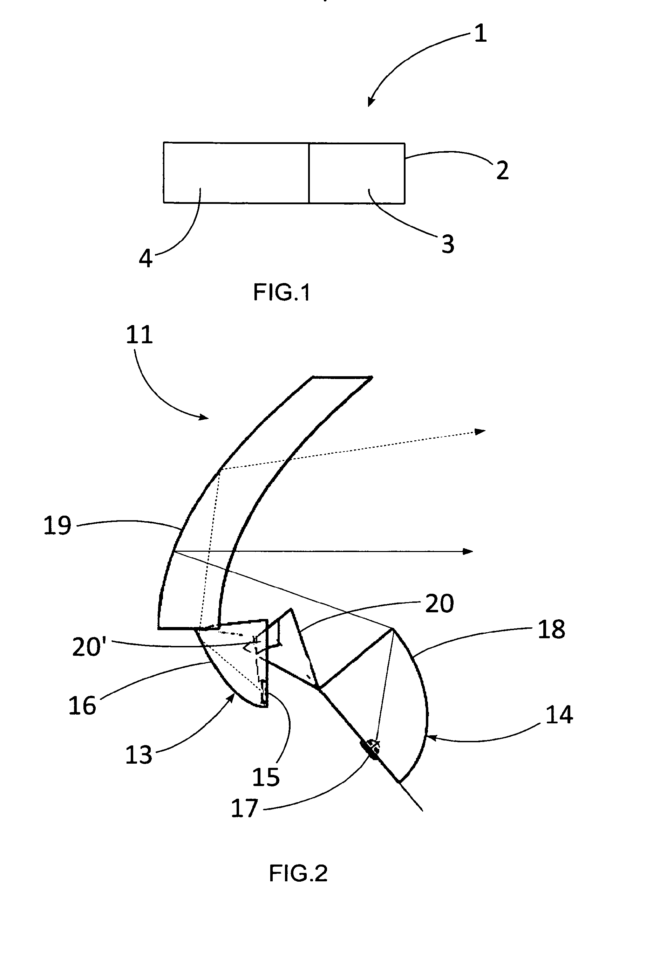

Un premier mode de réalisation d'un dispositif 11 d'éclairage et de signalisation selon l'invention est décrit ci-après en référence aux figures 2 à 4. Le dispositif d'éclairage et de signalisation est destiné à équiper un véhicule automobile. Il s'agit par exemple d'un dispositif d'éclairage et de signalisation avant d'un véhicule automobile. Le dispositif d'éclairage et de signalisation peut comprendre par exemple un premier système optique 14 et un deuxième système optique 13. Le premier système optique 13 et le deuxième système optique 14 partagent un réflecteur commun 19. Les premier et deuxième systèmes optiques font donc partie d'un module optique multifonction. Alternativement ou complémentairement, les premier et deuxième systèmes optiques peuvent aussi partager un dioptre commun.

Dans le mode de réalisation représenté, le premier système optique 14 comprend une source de lumière 17, par exemple une diode électroluminescente ou un ensemble de diodes électroluminescentes et un réflecteur 18, par exemple un réflecteur à surface ellipsoïdale. Il peut aussi comprendre une plieuse 20 ou tout autre type de cache et/ou une lentille optique.

Dans le mode de réalisation représenté, le deuxième système optique 13 comprend une source de lumière 15, par exemple une diode électroluminescente ou un ensemble de diodes électroluminescentes et un réflecteur 16, par exemple un réflecteur à surface ellipsoïdale. Il peut aussi comprendre une plieuse 20' ou tout autre type de cache et/ou une lentille optique.

Ainsi, le réflecteur commun 19 réfléchit les rayons lumineux émis par la source de lumière du premier système optique après réflexion sur le premier réflecteur 16 et réfléchit les rayons lumineux émis par la source de lumière du deuxième système optique après réflexion sur le deuxième réflecteur 18.

Le premier système optique et le deuxième système optique fonctionnent de préférence différemment dans un premier mode de fonctionnement permettant d'assurer une fonction d'éclairement de type feu de croisement et dans un deuxième mode de fonctionnement permettant d'assurer une fonction de signalisation diurne. Ainsi, visuellement, la signature allumée, de jour comme de nuit, du dispositif d'éclairage et de signalisation est définie par la forme du réflecteur commun 19. En conséquence, que le dispositif d'éclairage et de signalisation soit activé pour assurer une fonction de signalisation diurne (allumage de jour) ou pour assurer une fonction d'éclairage de type feu de croisement (allumage de nuit), l'aspect allumé du dispositif d'éclairage et de signalisation est le même.

Les deux systèmes optiques peuvent être activés dans les deux modes de fonctionnement.

Dans ce premier mode de réalisation, le dispositif d'éclairage et de signalisation comprend des moyens de modification des conditions de fonctionnement du premier système optique 14 et des moyens de modification des conditions de fonctionnement du deuxième système optique 13. Ces moyens de modification des conditions de fonctionnement du premier système optique et/ou du deuxième système optique comprennent des moyens de définition de paramètres de fonctionnement des premier et deuxième systèmes optiques, notamment des moyens électriques d'interruption, tel que des interrupteurs, et/ou des moyens de mise en forme de signaux électriques d'alimentation des sources de lumière, tels que des modulateurs de signaux électriques d'alimentation des sources de lumière.

Les sources de lumière 17, 14 des premier 14 et deuxième 13 systèmes optiques peuvent être de tout type. Préférentiellement, les sources de lumière comprennent une ou plusieurs diodes électroluminescentes.

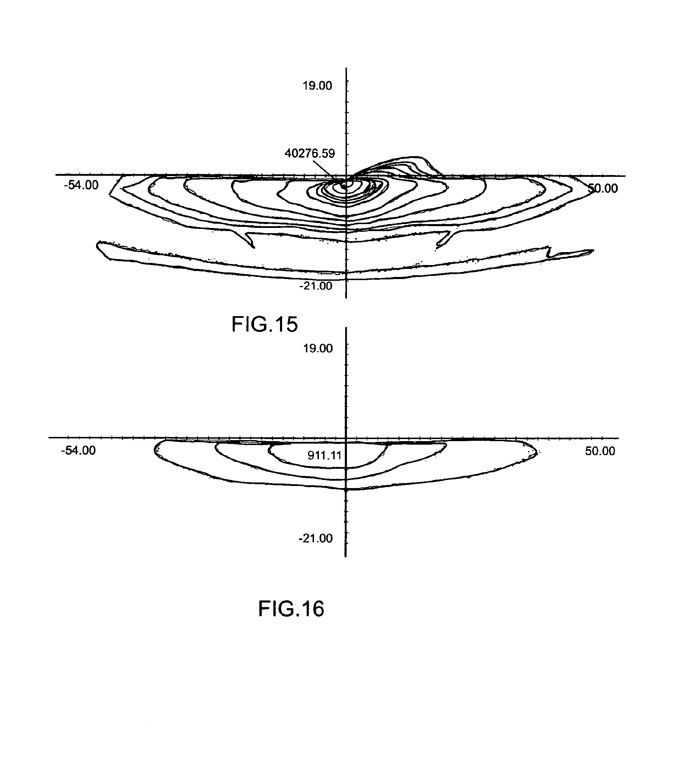

Dans le premier mode de fonctionnement du dispositif d'éclairage et de signalisation, le premier système optique 14 génère un premier faisceau lumineux de type feu de croisement produisant par exemple sur un écran distant la répartition d'éclairement illustrée à la figure 15. Dans ce premier mode de fonctionnement, le deuxième système optique peut ne pas générer de faisceau lumineux ou bien peut générer un faisceau constituant une partie d'un faisceau, préférentiellement de type lanterne. Ce premier mode de fonctionnement correspond à un mode d'éclairage et/ou de signalisation nocturne. Ainsi, dans ce premier mode de fonctionnement, la fonction d'éclairage feu de croisement est assurée. Visuellement, pour un observateur situé à distance du dispositif d'éclairage et de signalisation, dans ce premier mode de fonctionnement, la signature allumée de celui-ci est obtenue par la forme du réflecteur 19 mentionné précédemment. Pour assurer ce premier mode de fonctionnement, différents paramètres de fonctionnement du premier système optique et du deuxième système optique sont fixés. Les premier et deuxième systèmes optiques sont activés avec ces paramètres de fonctionnement. Ces paramètres peuvent être notamment la puissance électrique alimentant les sources lumineuses et/ou l'orientation du système optique, et/ou d'un élément du système optique, de manière à ce que le premier système optique génère un faisceau lumineux donné, dans cet exemple de premier mode de fonctionnement un feu de croisement.

Selon une variante de réalisation, le premier système comprend un seul réflecteur, une source de lumière et une plieuse comprenant un bord de coupure, agencés de manière à générer le faisceau à coupure, la coupure du faisceau correspondant à l'image du bord de coupure de la plieuse. Ce bord de coupure peut présenter un décrochement de manière à obtenir directement un faisceau à coupure tel qu'un feu de croisement.

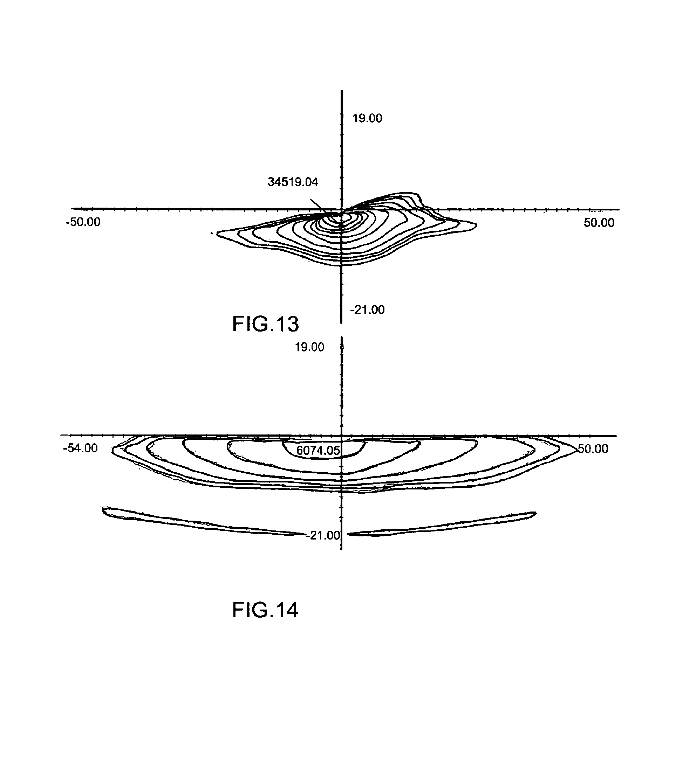

Selon une autre variante, le premier système peu comprendre deux sous-systèmes comprenant chacun un réflecteur 18 agencé, une plieuse 20 et une source de lumière 17. Pour chaque sous-système 14, ce réflecteur 18, cette plieuse 20 et cette source de lumière 17 sont agencés pour former un faisceau. Dans ce cas, c'est l'union des deux faisceaux obtenus par chacun des deux sous-systèmes qui forme le faisceau à coupure, ici le feu de croisement. Selon l'exemple, illustré, le bord de coupure d'une des plieuses 20 permet d'obtenir un faisceau concentré tel que celui de la figure 13, avec une portion de coupure en dessous de l'horizon dans le sens de circulation opposé, ici à gauche, et une coupure oblique remontante dans le sens de circulation du véhicule vers les bas-côtés, ici à droite. Le bord de coupure de l'autre plieuse 20 permet d'obtenir un faisceau large, tel que celui de la figure 14, avec une coupure en dessous de l'horizon dans le sens de circulation opposé, ici à gauche, et une coupure oblique dans le sens de circulation du véhicule, ici à droite.

Dans le deuxième mode de fonctionnement du dispositif d'éclairage et de signalisation, le premier système optique 14 génère un troisième faisceau lumineux différent du premier faisceau lumineux. De plus, dans ce deuxième mode de fonctionnement, le deuxième système optique 13 génère un autre faisceau lumineux. L'union du troisième lumineux et de cet autre faisceau constitue un faisceau résultant de type signalisation diurne. Ce deuxième mode de fonctionnement correspond à un mode de signalisation diurne. Ainsi, dans ce deuxième mode de fonctionnement, seule une fonction de signalisation diurne est assurée. Visuellement, pour un observateur situé à distance du dispositif d'éclairage et de signalisation, dans ce premier mode de fonctionnement, la signature allumée de celui-ci est obtenue par la forme du réflecteur 19 mentionné précédemment. Pour assurer ce deuxième mode de fonctionnement, différents paramètres de fonctionnement du premier système optique et du deuxième système optique sont fixés. Les premier et deuxième systèmes optiques sont activés avec ces paramètres de fonctionnement.

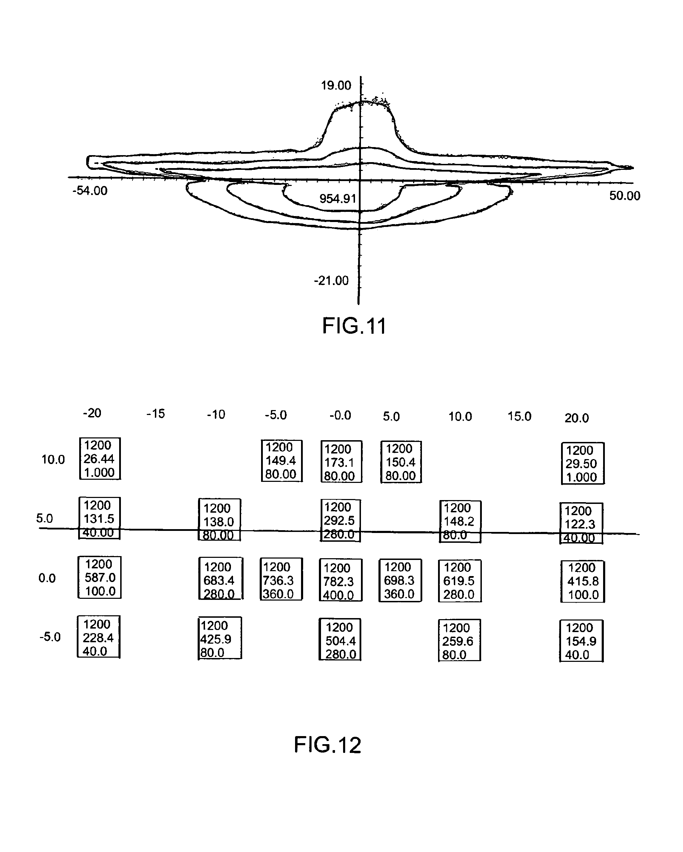

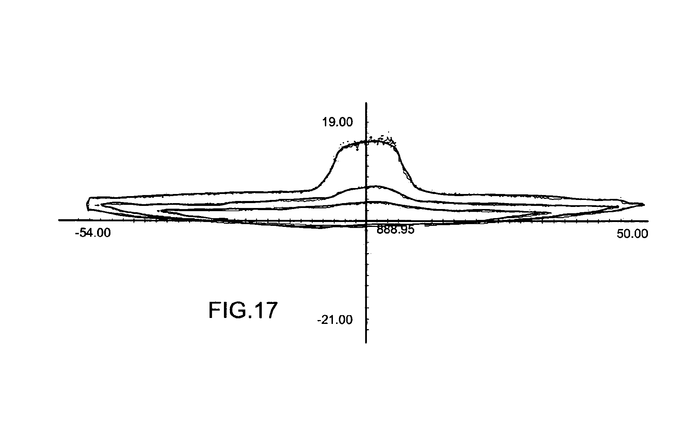

Dans le deuxième mode de fonctionnement, le troisième faisceau lumineux généré par le premier système optique produit par exemple sur un écran distant la répartition d'éclairement illustrée à la figure 16. Ceci peut être obtenu en allumant seulement certaines des sources de lumière 17 du premier système optique 14 et en les sous-alimentant par rapport à leur alimentation normale nécessaire pour générer le premier faisceau lumineux de type feu de croisement. Par exemple, les sources de lumière alimentées peuvent l'être à 15% de leur puissance nominale. A noter que la répartition illustrée en figure 16, à savoir le faisceau émis par le premier système optique 14 dans le cadre du deuxième mode de fonctionnement, peut notamment être obtenue, dans le cadre de la variante de réalisation à deux sous-systèmes, en éteignant la source lumineuse 14 du sous-système générant le faisceau concentré illustré en figure 13 et en sous-alimentant la source lumineuse 14 du sous-système générant le faisceau large illustré en figure 14. Par ailleurs, dans le deuxième mode de fonctionnement, le faisceau lumineux généré par le deuxième système optique 13 produit par exemple sur un écran distant la répartition d'éclairement illustrée à la figure 17. Ceci peut être obtenu en allumant des sources de lumière particulières 15 qui sont éteintes dans le premier mode de fonctionnement. Ceci peut être obtenu également, alternativement ou en complément, en suralimentant au moins certaines des sources de lumière du deuxième système optique qui sont allumées dans le premier mode de fonctionnement pour générer un quatrième faisceau, la suralimentation lors du deuxième mode de fonctionnement étant par rapport à leur alimentation nominale nécessaire pour générer le quatrième faisceau lumineux lors du premier mode de fonctionnement, constituant notamment une partie d'un faisceau de type lanterne. L'union du troisième faisceau lumineux et du deuxième faisceau lumineux est un faisceau lumineux de signalisation diurne produisant sur un écran distant la répartition d'éclairement illustré à la figure 11. Le faisceau lumineux de signalisation diurne est par exemple conforme à la réglementation, car conforme à la grille photométrique illustrée à la figure 12 et au règlement n° 87 de la commission économique pour l'Europe des Nations Unies (UNECE) intitulé « UNIFORM PROVISIONS CONCERNING THE APPROVAL OF DAYTIME RUNNING LAMPS FOR POWER-DRIVEN VEHICLES ». Le faisceau lumineux de signalisation diurne peut aussi être conforme à toute autre réglementation.

Dans le deuxième mode de fonctionnement, le faisceau lumineux résultant peut être obtenu par tout autre moyen pourvu que le premier système et/ou le deuxième système optiques soient activés. Par exemple, toutes les sources lumineuses du premier système optique peuvent rester allumées, mais sous-alimentées, dans le deuxième mode de fonctionnement. De même, dans les premier et deuxième modes de fonctionnement, les mêmes sources lumineuses du deuxième système optique peuvent être allumées, ces sources lumineuses étant simplement activées dans des conditions d'alimentation différentes.

Selon le premier mode de réalisation, le premier système optique peut comprendre plusieurs sources de lumière. Pour produire un faisceau lumineux de type feu de croisement, par exemple tel qu'un faisceau de croisement conforme aux règlements n°123 et/ou n° 112 de la commission économique pour l'Europe des Nations Unies intitulés « DISPOSITIONS UNIFORMES CONCERNANT L'HOMOLOGATION DES SYSTÈMES D'ÉCLAIRAGE AVANT ADAPTATIFS (AFS) DESTINÉS AUX VÉHICULES AUTOMOBILES » et « UNIFORM PROVISIONS CONCERNING THE APPROVAL OF MOTOR VEHICLE HEADLAMPS EMITTING AN ASYMMETRICAL PASSING BEAM OR A DRIVING BEAM OR BOTH AND EQUIPPED WITH FILAMENT LAMPS AND/OR LED MODULES », comme celui représenté à la figure 15, ou un faisceau lumineux de type feu de croisement conforme à toute autre réglementation, plusieurs ou toutes ces sources de lumière doivent être allumées.

Un deuxième mode de réalisation d'un dispositif 1 d'éclairage et de signalisation selon l'invention est décrit ci-après en référence à la figure 1. Le dispositif d'éclairage et de signalisation est destiné à équiper un véhicule automobile. Il s'agit par exemple d'un dispositif d'éclairage et de signalisation avant d'un véhicule automobile. Le dispositif d'éclairage et de signalisation peut comprendre par exemple un premier système optique 3, comme un premier module optique 3, et un deuxième système optique 4, comme un deuxième module optique 4. Vu de face, la signature du dispositif d'éclairage et de signalisation est définie par l'union 2 des projections des premier et deuxième systèmes optiques. Dans le mode de réalisation représenté, cette signature est une surface rectangulaire 2.

Dans ce deuxième mode de réalisation, les moyens de modification des conditions de fonctionnement du premier système optique et des moyens de modification des conditions de fonctionnement du deuxième système optique peuvent être identiques aux moyens de modification des conditions de fonctionnement décrits précédemment relativement au premier mode de réalisation.

Dans le premier mode de fonctionnement du deuxième mode de réalisation du dispositif d'éclairage et de signalisation, le premier système optique génère un premier faisceau lumineux de type feu de croisement produisant par exemple sur un écran distant la répartition d'éclairement illustrée à la figure 15. De même, dans ce premier mode de fonctionnement, le deuxième système optique génère un quatrième faisceau lumineux de type lanterne. Ce premier mode de fonctionnement correspond à un mode d'éclairage et de signalisation nocturne. Ainsi, dans ce premier mode de fonctionnement, la fonction d'éclairage feu de croisement et la fonction de signalisation lanterne sont assurées. Visuellement, pour un observateur situé à distance du dispositif d'éclairage et de signalisation, dans ce premier mode de fonctionnement, la signature allumée de celui-ci est constituée par le rectangle 2 mentionné précédemment. Pour assurer ce premier mode de fonctionnement, différents paramètres de fonctionnement du premier système optique et du deuxième système optique sont fixés. Les premier et deuxième systèmes optiques sont activés avec ces paramètres de fonctionnement.

Dans un deuxième mode de fonctionnement du deuxième mode de réalisation du dispositif d'éclairage et de signalisation, le premier système optique génère un troisième faisceau lumineux différent du premier faisceau lumineux. De même, dans ce deuxième mode de fonctionnement, le deuxième système optique génère un deuxième faisceau lumineux différent du quatrième faisceau lumineux. L'union du troisième et du deuxième faisceau lumineux constitue un faisceau résultant de type signalisation diurne. Ce deuxième mode de fonctionnement correspond à un mode de signalisation diurne. Ainsi, dans ce deuxième mode de fonctionnement, seule une fonction de signalisation diurne est assurée. Visuellement, pour un observateur situé à distance du dispositif d'éclairage et de signalisation, dans ce deuxième mode de fonctionnement, la signature allumée de celui-ci est constituée par le rectangle 2 mentionné précédemment. Pour assurer ce deuxième mode de fonctionnement, différents paramètres de fonctionnement du premier système optique et du deuxième système optique sont fixés. Les premier et deuxième systèmes optiques sont activés avec ces paramètres de fonctionnement.

Ainsi, pour un observateur situé à distance du dispositif d'éclairage et de signalisation, la signature allumée de celui-ci est constituée par le rectangle 2 mentionné précédemment, tant dans le deuxième mode de fonctionnement que dans le premier mode de fonctionnement. On peut donc avoir une signature identique de jour comme de nuit.

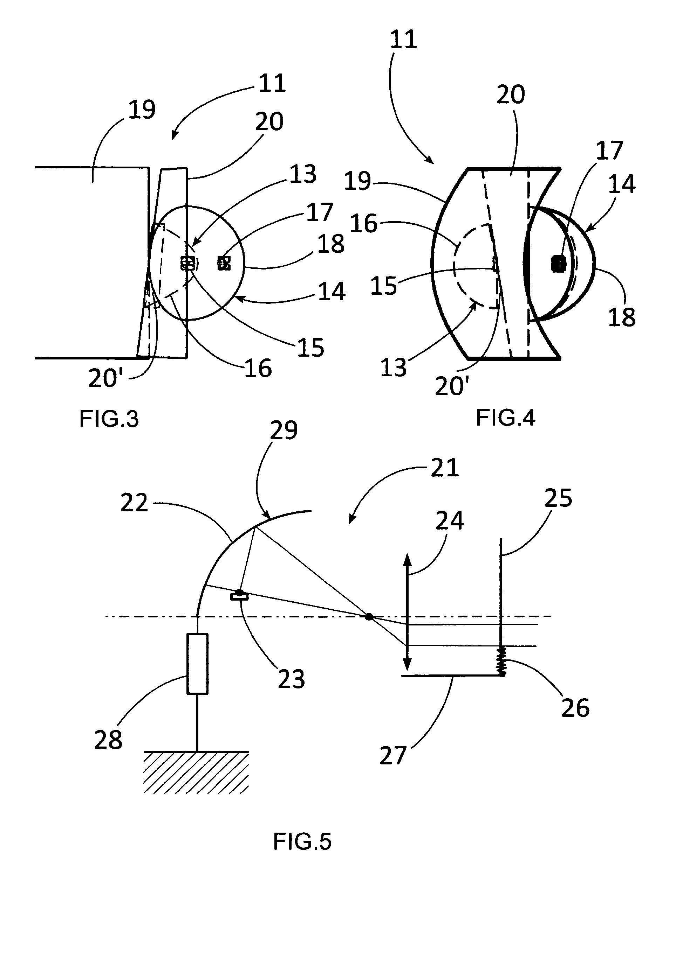

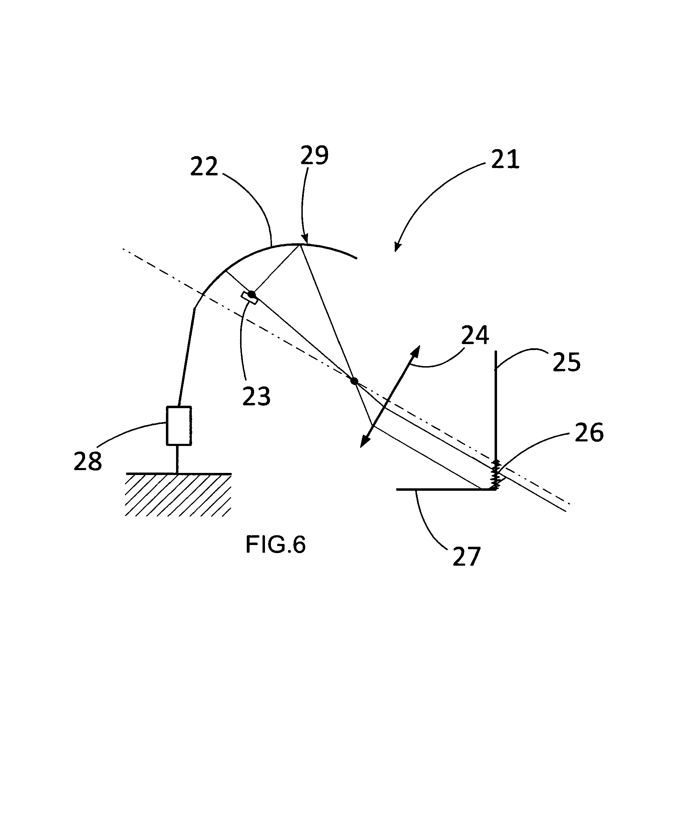

Selon une première variante de réalisation du deuxième mode de réalisation, décrite ci-après en référence aux figures 5 et 6, le premier système optique 29 comprend au moins un élément mobile 22. Le deuxième système optique n'est pas représenté.

Selon cette variante, le premier système optique 29 comprend une source de lumière 23, par exemple une diode électroluminescente ou un ensemble de diodes électroluminescentes et un réflecteur 22, par exemple un réflecteur à surface ellipsoïdale. Il peut aussi comprendre une plieuse ou tout autre type de cache et une lentille optique 24.

Le premier système optique comprend également un actionneur 28 permettant de déplacer au moins un élément du premier système optique. Cet actionneur peut permettre le déplacement du réflecteur par rapport à la source de lumière et/ou par rapport à la lentille optique. Il peut aussi permettre le déplacement de la source de lumière par rapport au réflecteur et/ou à la lentille optique. Il peut enfin permettre le déplacement de la lentille optique relativement au réflecteur et/ou à la source de lumière. L'actionneur peut encore permettre de déplacer l'ensemble des éléments optiques du premier système optique, à savoir la source de lumière et le réflecteur et éventuellement la lentille optique.

L'actionneur 28 peut être un actionneur de correction de portée du faisceau lumineux de type feu de croisement produit par le premier système optique. L'actionneur 28 peut alternativement être un actionneur spécifique distinct d'un autre actionneur non représenté et assurant la correction de portée du faisceau lumineux. La précision d'un tel actionneur spécifique peut être beaucoup moins importante que celle d'un actionneur de correction de portée.

Selon cette première variante de réalisation, le dispositif d'éclairage et de signalisation comprend une glace 25 présentant une zone diffusante 26 et/ou comprend une zone réfléchissante 27, par exemple prévue sur un masque du dispositif d'éclairage et de signalisation.

Dans un premier mode de fonctionnement du dispositif d'éclairage et de signalisation représentée à la figure 5, l'actionneur 28 est dans une première configuration et un premier faisceau lumineux produit par le premier système optique traverse la glace 25 sans intercepter la zone diffusante ou la zone réfléchissante. Le faisceau sortant du dispositif d'éclairage et de signalisation constitue alors le premier faisceau, ce faisceau lumineux étant par exemple de type feu de croisement. Un quatrième faisceau lumineux de type lanterne est alors produit par le deuxième système optique non représenté. Dans cette configuration de l'actionneur, le dispositif d'éclairage et de signalisation assure une fonction d'éclairage de type feu de croisement et une fonction de signalisation de type lanterne.

Dans un deuxième mode de fonctionnement du dispositif d'éclairage et de signalisation représentée à la figure 6, l'actionneur 28 est dans une deuxième configuration et le faisceau lumineux produit par le premier système optique traverse la glace 25 en interceptant la zone diffusante et/ou la zone réfléchissante. Le faisceau sortant du dispositif d'éclairage et de signalisation constitue alors le troisième faisceau, ce faisceau lumineux étant une composante d'un faisceau lumineux de type signalisation diurne. La composante complémentaire du faisceau lumineux de type signalisation diurne, à savoir le deuxième faisceau lumineux, est produite par le deuxième système optique.

Ainsi, visuellement, les signatures allumées, de jour et de nuit, du dispositif d'éclairage et de signalisation peuvent être très ressemblantes mêmes si elles ne sont pas strictement identiques. En effet, entre les deux modes de fonctionnement, la surface visible allumée du premier système optique est décalée verticalement d'une partie non diffusante de la glace à une partie diffusante de la glace. La surface visible allumée du deuxième système optique est identique dans les deux modes de fonctionnement.

Selon cette première variante du deuxième mode de réalisation, les moyens de modification des conditions de fonctionnement du deuxième système optique peuvent tels que décrits précédemment pour ce deuxième mode de réalisation.

Par contre, les moyens de modification des conditions de fonctionnement du premier système optique comprennent l'actionneur 28. Cet actionneur permet de modifier l'orientation du faisceau lumineux produit par le premier système optique et/ou de modifier la forme du faisceau lumineux produit par le premier système optique. Par ailleurs, les moyens de modification des conditions de fonctionnement du premier système peuvent aussi comprendre des moyens électriques d'interruption et/ou des moyens de mise en forme de signaux électriques d'alimentation des sources de lumière de sorte à moduler l'éclairement produit par le premier système optique.

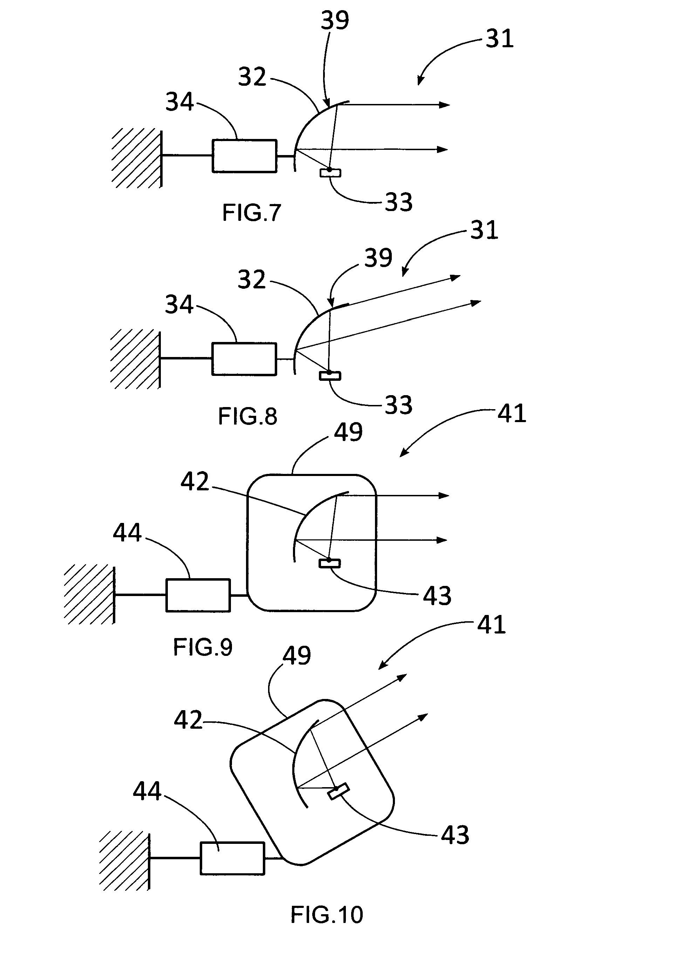

Selon une deuxième variante de réalisation du deuxième mode de réalisation, décrite ci-après en référence aux figures 7 et 8, le premier système optique 39 comprend au moins un élément mobile 32. Le deuxième système optique n'est pas représenté.

Selon cette variante, le premier système optique 39 comprend une source de lumière 33, par exemple une diode électroluminescente ou un ensemble de diodes électroluminescentes et un réflecteur 32, par exemple un réflecteur à surface de type parabolique. Alternativement, selon une variante de l'invention non représentée dans les figures, le réflecteur peut être un réflecteur dit « elliptique », à savoir avec une forme correspondant environ à une portion d'ellipsoïde. Le réflecteur est alors associé à une plieuse ou tout autre type de cache et une lentille optique. Dans ce cas, l'élément optique mobile, n'est plus le réflecteur mais la lentille et/ou la plieuse.

Le premier système optique comprend également un actionneur 34 permettant de déplacer au moins un élément 32 du premier système optique. Cet actionneur peut permettre le déplacement du réflecteur par rapport à la source de lumière et/ou par rapport à la lentille optique. Il peut aussi permettre le déplacement de la source de lumière par rapport au réflecteur et/ou à la lentille optique. Il peut enfin permettre le déplacement de la lentille optique et/ou de la plieuse relativement au réflecteur et/ou à la source de lumière.

L'actionneur 34 peut être un actionneur de correction de portée du faisceau lumineux de type feu de croisement produit par le premier système optique. Alternativement, l'actionneur 34 peut être un actionneur spécifique distinct d'un autre actionneur non représenté et assurant la correction de portée du faisceau lumineux. La précision d'un tel actionneur spécifique peut être beaucoup moins importante que celle d'un actionneur de correction de portée. L'actionneur peut comprendre un actionneur spécifique et un autre actionneur de correction de portée du faisceau lumineux.

Dans un premier mode de fonctionnement du dispositif d'éclairage et de signalisation représentée à la figure 7, l'actionneur 34 est dans une première configuration et un premier faisceau lumineux produit par le premier système optique est de type feu de croisement. Un quatrième faisceau lumineux de type lanterne est alors produit par le deuxième système optique non représenté. Dans cette configuration de l'actionneur, le dispositif d'éclairage et de signalisation assure une fonction d'éclairage de type feu de croisement et une fonction de signalisation de type lanterne.

Dans un deuxième mode de fonctionnement du dispositif d'éclairage et de signalisation représenté à la figure 8, l'actionneur 34 est dans une deuxième configuration et un troisième faisceau lumineux produit par le premier système optique se retrouve relevé, plus orienté vers le haut, par rapport au premier faisceau lumineux. Ce troisième faisceau lumineux est une composante d'un faisceau lumineux de type signalisation diurne. La composante complémentaire du faisceau lumineux de type signalisation diurne, à savoir le deuxième faisceau lumineux, est produite par le deuxième système optique.

Ainsi, visuellement, les signatures allumées, de jour et de nuit, du dispositif d'éclairage et de signalisation peuvent être identiques ou très ressemblantes. En effet, entre les deux modes de fonctionnement, la surface visible allumée du premier système optique n'a pas varié ou a très peu varié (variation d'inclinaison de quelques degrés du réflecteur 32). La surface visible allumée du deuxième système optique est identique dans les deux modes de fonctionnement.

Dans cette deuxième variante du deuxième mode de réalisation, les moyens de modification des conditions de fonctionnement du deuxième système optique peuvent être identiques aux moyens de modification des conditions de fonctionnement décrits précédemment pour le deuxième mode de réalisation.

Les moyens de modification des conditions de fonctionnement du premier système optique comprennent l'actionneur 34. Cet actionneur permet de modifier l'orientation du faisceau lumineux produit par le premier système optique et/ou de modifier la forme du faisceau lumineux produit par le premier système optique. Par ailleurs, les moyens de modification des conditions de fonctionnement du premier système peuvent aussi comprendre des moyens électriques d'interruption et/ou des moyens de mise en forme de signaux électriques d'alimentation des sources de lumière de sorte à moduler l'éclairement produit par le premier système optique.

Selon une troisième variante de réalisation du deuxième mode de réalisation, décrite ci-après en référence aux figures 9 et 10, l'actionneur 44 permet de déplacer l'ensemble des éléments optiques du premier système optique 49, à savoir la source de lumière 43 et le réflecteur 42 et éventuellement la lentille optique et une plieuse.

Dans les deuxièmes et troisièmes variantes du deuxième mode de réalisation, l'actionneur permet de relever le premier faisceau de type code pour le transformer en un troisième faisceau éclairant plus haut. Cependant, ce troisième faisceau peut ne pas suffire pour remplir toutes les contraintes d'éclairement définies par la grille photométrique réglementaire d'un faisceau de signalisation diurne. Ainsi, pour compléter cette grille réglementaire, on utilise un deuxième faisceau lumineux généré par le deuxième système optique.

Un mode d'exécution d'un procédé de fonctionnement d'un dispositif d'éclairage et de signalisation d'un véhicule automobile est décrit ci-après.

Dans un premier mode de fonctionnement (utilisé la nuit), on active le premier système optique et on fixe les conditions de fonctionnement du premier système optique, de sorte qu'il produise un premier faisceau lumineux à coupure, notamment un feu de croisement. De plus, dans ce premier mode de fonctionnement, on active le deuxième système optique et on fixe les conditions de fonctionnement du deuxième système optique, de sorte qu'il produise un quatrième faisceau lumineux.

Dans un deuxième mode de fonctionnement (utilisé le jour), on active le premier système optique et on fixe ses conditions de fonctionnement, de sorte qu'il produise un troisième faisceau lumineux. Les troisième et deuxième faisceaux lumineux générés sont tels que leur union constitue un faisceau lumineux résultant de type signalisation diurne.

Le deuxième système optique peut être éteint lorsque le premier système optique génère le premier faisceau lumineux.

Comme vu précédemment, les conditions de fonctionnement du premier système optique, de sorte qu'il produise le troisième faisceau lumineux, peuvent comprendre une sous-alimentation du premier système optique et/ou un allumage ou une extinction de certaines sources de lumière du premier système optique.

Comme vu précédemment, les conditions de fonctionnement du deuxième système optique, de sorte qu'il produise le quatrième faisceau lumineux, peuvent comprendre une sous-alimentation du deuxième système optique, le deuxième système optique produisant par exemple, sous alimentation nominale, un deuxième faisceau lumineux procurant en combinaison avec le troisième faisceau lumineux un faisceau de type DRL. Les conditions de fonctionnement du deuxième système optique, de sorte qu'il produise le quatrième faisceau lumineux, peuvent aussi comprendre un allumage ou une extinction de certaines sources de lumière du deuxième système optique.

Comme vu précédemment, les conditions de fonctionnement du premier système optique, de sorte qu'il produise le troisième faisceau lumineux, peuvent comprendre un mouvement d'au moins un élément du premier système optique, de sorte que le troisième faisceau lumineux soit déduit du premier faisceau lumineux par au moins une déviation du premier faisceau lumineux vers le haut.

Comme vu précédemment, les conditions de fonctionnement du premier système optique, de sorte qu'il produise le troisième faisceau lumineux, peuvent comprendre un mouvement d'au moins un élément du premier système optique, de sorte que le faisceau lumineux produit par le premier système optique impacte un élément diffusant et/ou réfléchissant. Pour ce faire, le faisceau lumineux produit par le premier système optique peut être dévié vers le bas pour impacter l'élément réfléchissant et/ou diffusant.

Pour ce faire, on peut activer un actionneur de correction du premier système optique pour contribuer au mouvement de l'au moins un élément du premier système ou obtenir le mouvement de l'au moins un élément du premier système. Alternativement ou complémentairement, on peut activer un actionneur spécifique, distinct d'un actionneur de correction du premier système, pour contribuer au mouvement de l'au moins un élément du premier système ou obtenir le mouvement de l'au moins un élément du premier système.

Dans ce cas, l'actionneur spécifique permet de déplacer un réflecteur du premier système relativement à une source de lumière du premier système ou de déplacer une lentille optique et/ou une plieuse relativement à la source de lumière et/ou relativement au réflecteur.

Dans ce document, on entend par « faisceau de type signalisation diurne », un faisceau lumineux conforme au règlement n° 87 de la commission économique pour l'Europe des Nations Unies intitulé « UNIFORM PROVISIONS CONCERNING THE APPROVAL OF DAYTIME RUNNING LAMPS FOR POWER-DRIVEN VEHICLES » ou un faisceau lumineux de type signalisation diurne conforme à toute autre réglementation.

Dans ce document, on entend par « faisceau de type lanterne », un faisceau lumineux conforme au règlement n° 77 de la commission économique pour l'Europe des Nations Unies intitulé « UNIFORM PROVISIONS CONCERNING THE APPROVAL OF PARKING LAMPS FOR POWER-DRIVEN VEHICLES » ou un faisceau lumineux de type lanterne conforme à toute autre réglementation.

Dans ce document, on entend par « faisceau de type feu de croisement », un faisceau lumineux conforme aux règlements n°123 et/ou n° 112 de la commission économique pour l'Europe des Nations Unies intitulés « DISPOSITIONS UNIFORMES CONCERNANT L'HOMOLOGATION DES SYSTÈMES D'ÉCLAIRAGE AVANT ADAPTATIFS (AFS) DESTINÉS AUX VÉHICULES AUTOMOBILES » et « UNIFORM PROVISIONS CONCERNING THE APPROVAL OF MOTOR VEHICLE HEADLAMPS EMITTING AN ASYMMETRICAL PASSING BEAM OR A DRIVING BEAM OR BOTH AND EQUIPPED WITH FILAMENT LAMPS AND/OR LED MODULES » ou un faisceau lumineux de type feu de croisement conforme à toute autre règlementation.

## Revendications

1. Procédé de fonctionnement d'un dispositif d'éclairage et de signalisation (1 ; 11 ; 21 ; 31 ; 41) d'un véhicule automobile, **caractérisé en ce qu'**il comprend les étapes suivantes :
- activer un premier système optique (3 ; 14 ; 29 ; 39 ; 49) destiné à générer un premier faisceau lumineux à coupure, notamment un feu de croisement ou un feu antibrouillard,
- fixer des conditions de fonctionnement du premier système optique de sorte qu'il produise un troisième faisceau lumineux,
- activer un deuxième système optique (4 ; 13) destiné à générer un deuxième faisceau lumineux,
les troisième et deuxième faisceaux lumineux générés étant tels que leur union constitue un faisceau résultant de type signalisation diurne.

2. Procédé de fonctionnement selon la revendication précédente, dans lequel le deuxième système optique (4 ; 13) est destiné à générer un quatrième faisceau lumineux, notamment de type lanterne, ledit procédé comprenant une étape supplémentaire suivante :
- fixer des conditions de fonctionnement du deuxième système optique de manière à ce qu'il produise le deuxième faisceau lumineux.

3. Procédé de fonctionnement selon la revendication précédente, dans lequel le deuxième système optique (4 ; 13) est éteint lorsque le premier système optique génère le premier faisceau lumineux.

4. Procédé de fonctionnement selon l'une des revendications précédentes, **caractérisé en ce que** les conditions de fonctionnement du premier système optique, de sorte qu'il produise le troisième faisceau lumineux, comprennent une sous-alimentation du premier système optique et/ou une alimentation de seulement quelques éléments de la source de lumière du premier système optique.

5. Procédé de fonctionnement selon l'une des revendications 1 à 4, **caractérisé en ce que** les conditions de fonctionnement du deuxième système optique, de sorte qu'il produise le quatrième faisceau lumineux, comprennent une sous-alimentation du deuxième système optique et/ou une extinction d'éléments de la source de lumière du deuxième système optique, le deuxième système optique produisant par exemple, sous alimentation nominale d'au moins certains éléments de la source, un deuxième faisceau lumineux constituant une partie d'un faisceau de signalisation diurne.

6. Procédé de fonctionnement selon l'une des revendications 1 à 5, **caractérisé en ce que** les conditions de fonctionnement du premier système optique, de sorte qu'il produise le troisième faisceau lumineux, comprennent un mouvement d'au moins un élément (32 ; 33 ; 49) du premier système optique, de sorte que le troisième faisceau lumineux soit déduit du premier faisceau lumineux par au moins une déviation du premier faisceau lumineux vers le haut.

7. Procédé de fonctionnement selon l'une des revendications 1 à 5, **caractérisé en ce que** les conditions de fonctionnement du premier système optique, de sorte qu'il produise le troisième faisceau lumineux, comprennent un mouvement d'au moins un élément (22 ; 23 ; 24 ; 29) du premier système optique, de sorte que le faisceau lumineux produit par le premier système optique impacte un élément diffusant et/ou réfléchissant.

8. Procédé de fonctionnement selon la revendication 6 ou 7, **caractérisé en ce qu'**on active un actionneur (44) de correction de portée du premier système optique pour :
- contribuer au mouvement de l'au moins un élément du premier système, ou
- obtenir le mouvement de l'au moins un élément du premier système.

9. Procédé de fonctionnement selon l'une des revendications 6 à 8, **caractérisé en ce qu'**on active un actionneur spécifique (28 ; 34), distinct d'un actionneur de correction de portée du premier système, pour contribuer au mouvement de l'au moins un élément du premier système ou obtenir le mouvement de l'au moins un élément du premier système.

10. Dispositif d'éclairage et de signalisation (1 ; 11 ; 21 ; 31 ; 41) d'un véhicule automobile, comprenant un premier système optique (3 ; 14 ; 29 ; 39 ; 49) destiné à générer un premier faisceau lumineux à coupure, notamment un feu de croisement ou un feu antibrouillard et un deuxième système optique (4 ; 13) générant un deuxième faisceau lumineux, **caractérisé en ce que** le premier système optique est apte à générer un troisième faisceau lumineux, et **en ce que** l'union des troisième et deuxième faisceaux lumineux constitue un faisceau résultant de type signalisation diurne.

11. Dispositif selon la revendication précédente, **caractérisé en ce que** le deuxième système optique est apte à générer un quatrième faisceau lumineux notamment un quatrième faisceau lumineux de type lanterne.

12. Dispositif selon la revendication 10 ou 11, **caractérisé en ce qu'**il comprend des moyens (28 ; 34 ; 44) de modification des conditions de fonctionnement du premier système optique pour générer sélectivement le premier ou le troisième faisceau lumineux et/ou des moyens de modification des conditions de fonctionnement du deuxième système optique pour générer sélectivement le deuxième ou le quatrième faisceau lumineux.

13. Dispositif selon la revendication 12, **caractérisé en ce que** les moyens de modification des conditions de fonctionnement du premier système optique comprennent un moyen de modification des conditions d'alimentation du premier système optique et/ou **en ce que** les moyens de modification des conditions de fonctionnement du deuxième système optique comprennent un moyen de modification des conditions d'alimentation du deuxième système optique.

14. Dispositif selon la revendication 12 ou 13, **caractérisé en ce que** les moyens de modification des conditions de fonctionnement du premier système optique comprennent un moyen (28 ; 34 ; 44) de modification de la position d'au moins un élément (22 ; 23 ; 24 ; 29 ; 39 ; 49) du premier système optique.

15. Dispositif (11) selon l'une des revendications 10 à 13, **caractérisé en ce que** les premier (14) et deuxième (13) systèmes optiques sont réunis au sein d'un module optique multifonction, les premier et deuxième systèmes optiques partageant au moins une surface réfléchissante (19) et/ou un dioptre optique.

16. Dispositif (11) selon l'une des revendications 10 à 15, **caractérisé en ce que** la ou les sources de lumière du premier (14) et/ou du deuxième (13) systèmes optiques sont des LEDs ou des ensembles de LEDs.
